Europäisches Patentamt

European Patent Office

Office européen des brevets

(11) Publication number: **0 132 233**
**A1**

# EUROPEAN PATENT APPLICATION

(21) Application number: 84830179.2

(51) Int. Cl.⁴: **G 01 F 23/22**

(22) Date of filing: 14.06.84

(30) Priority: 15.06.83 IT 4850383

(43) Date of publication of application:
23.01.85 Bulletin 85/4

(84) Designated Contracting States:
AT BE CH DE FR GB IT LI LU NL SE

(71) Applicant: Cozzolino, Mario
Via A. Fleming, 101/A
I-00100 Roma-RM(IT)

(72) Inventor: Cozzolino, Mario
Via A. Fleming, 101/A
I-00100 Roma-RM(IT)

(54) Thermochromatic method for the level determination of liquids or liquefied gases in metallic containers, and apparatus therefor.

(57) The method is characterized by the use of a strip (B) of thermal colour sensitive material applied to at least a part of the container towards the top and in contact with the external wall (A), of the application of heat to such strip (B) of thermal colour sensitive material directly or indirectly from an outside source and successively the natural cooling of the strip (B) of thermal colour sensitive material, the level of the liquid in the container being indicated by the variation in colour on the said strip of thermal colour sensitive material.

FIG.1

EP 0 132 233 A1

Croydon Printing Company Ltd.

—1—

THERMOCROMOGRAPHIC METHOD FOR LEVEL DETERMINATION IN
METALLIC CONTAINERS OF LIQUIDS OR LIQUIFIED GASES AND
RESPECTIVE APPARATUS

The present invention relates to a method and the relative apparatus that, utilizing the principle of thermic equilibrium and therefore the thermal gradient of iron on contact with liquids, determines the level in metallic containers of liquids or liquified gasses.

The techniques that have been utilized for the identification of levels of liquid inside metallic containers have been numerous, but the major part are based on the immersion in the containers of floats which have communicated to the exterior through electric, magnetic or mechanic systems the information requested, but in all cases by means of direct communication. As regards hermetically-closed containers gamma ray systems have been used especially in the process of refilling the containers in the plant in order to reach a pre-established level of liquid. In any case the techniques applied have been selected in relation to the size of the metallic containers and on the basis of to whom the measure of level was directed.

A new method has now been found to determine the level of liquid which is particularly useful for those metallic containers where control of the level of the liquid is necessary without opening the container or where due to the nature of the liquid it will be problematic to create direct contact between the inside of the container and the outside and where therefore it is indispensable to be able to measure from the outside in any moment the level of liquid inside.

The thermographic method, which is the subject of the present invention, is characterized by the utilization of a strip of material which changes colour thermally, possibly sensitive, applied to at least a part of the external side of the container from the bottom upwards and in direct contact with the side of the container. The method then applies heat to the strip of thermal colour sensitive material directly or indirectly through an external source and successively to permit cooling in a natural manner of the thermal colour sensitive strip of material, the level of the liquid in the container being indicated through the variation of colour on the strip of thermal colour sensitive material. The thermal colour sensitive material can be made of liquid cristal. The source of heat can be of any type though preferably electricity. The strip of thermal colour sensitive material in contact with the external wall of the container can be adhesive.

This method has affronted the problem of identification of the temperature of reference or the base temperature.

For purposes of such identification, variations in the external temperature in which the container is located have been taken into consideration, as well as the level of sensitivity of the thermal colour sensitive material to be applied in the presence of sources of heat and remaining fixed in the new colour before returning to its original colour.

The temperature of reference has been established at 50° C. inasmuch as it was considered that the external environment could only with great difficulty exceed such limit and in any case such a temperature would only exist in particular conditions and can therefore be considered as applicable in a marginal number of cases.

The level of the liquid inside the containers causes on the metallic wall of the same a varying level of absorption of the heat applied on the external wall of the container. Therefore, for example, with the application of a source of heat of from 80° C. to 100° C. the external metallic wall will cool to 50° C. after withdrawal of the source of heat. This process will cause differing temperatures in the metallic containers at the point where the source of heat was applied as a result of which the temperature on the part in contact with the liquid inside will absorb the heat applied more rapidly and will be several degrees inferior to the temperature on the part in contact with internal vapours or nothing. Applying a chromographic temperature measurer on the external wall of the container at the point where the heat is applied and calibrated to 30° C., when the application of the heat ceases and the metallic part tends to cool reversing the thermoprocess previously provoked on the basis of different thermoparameters, the part of such measurer which is in contact with the metal wall in contact with the liquid inside, which will have reached during the cooling process a temperature of 30° C., will show a colour corresponding to a temperature of 30° C. and the part in contact with the metal wall in contact with liquid vapours or nothing will show a colour corresponding to a temperature superior to 30° C. and close to 50° C. The line between the two colours shown by the chromographic measurer will indicate on the external wall of the container the level of the liquid inside. In particular the method described will be utilized to indicate the level of liquified petroleum gas in metallic containers utilized for domestic or industrial purposes, of small dimensions and for which it is practically impossible to create a line of communication between the inside and the outside of the containers for obvious reasons of safety. A further aspect of the present invention is an apparatus to operate the above-described method that applied to the external wall of the metallic container gives in a brief interval of time the indication of the level of the liquid inside. Such apparatus consists basically of a chromographic part and an electric part, the chromographic part being comprised of a strip of thermal colour sensitive material, returning to its original colour, preferably of liquid cristals, the electric part being comprised of a plate of magnetic tape connected to the chromographic strip and of insulated tape electrically heated which adheres to the magnetic tape. Eventually the quantity of heat necessary to be applied electrically can be controlled by a time switch. The apparatus can also be comprised only of the chromographic part.

Below the chromographic part is described in greater detail.

The chromographic part is comprised of a strip of thermal colour sensitive material which returns to its original colour. Such strip, because such thermal colour sensitive materials deteriorate in light, must be periodically substituted. The length for such strip varies according to the height of the metallic container on which it is to be applied. The thermal colour sensitive material generally of liquid cristal is calibrated on a base temperature or reference temperature on which the different temperatures to be measured is shown. Such chromographic part enters into action when the metallic wall on which it is applied undergoes a variation of temperature reaching for example 50° C. or more thus causing a variation in the colour of the strip. The part of the strip in contact with the metallic wall that has reached 30° C. will assume a different colour from the part of the strip which is in contact with the metallic wall which has cooled to less than 30° C. It is clear that such principle is valid for any temperature of reference or base temperature which has been pre-determined. For small containers of liquid gas, particularly those for domestic use, for camping, etc., the heat of the metallic wall of the container can be applied through pouring on the zone of the chromographic measurer attached to the metallic wall of the container, boiling water suitably canalized to obtain the maximum effect.

Below the electric part of the apparatus is described in greater detail.

The electric part of the measurer is comprised of a plate of magnetic tape that, joined to the chromographic strip, is tightly stuck to the external wall of the metallic container. Such magnetic tape has incorporated an insulated electric heating tape that at 220 volts reaches a temperature of 100° C irrespective of its length. When this part of the apparatus reaches very rapidly the desired temperature, a time switch enters into action which cuts off the electric current. At this point the inversion of the sub-thermal exchange is initiated, as a result of which the surface of the metallic container in contact with the liquid absorbs rapidly the heat previously applied to the metallic wall of the electric plate, cooling rapidly to below 30° C., which level is shown optically by the chromographic measurer, whereas the part of the metallic wall in contact with gas vapours or nothing absorbs more slowly the heat applied by the electric plate and therefore the chromographic measurer indicates a colour corresponding to a temperature above 30° C. The different temperatures indicated due to the different rates of thermal absorption of the metallic walls of the container are indicated on the strip of the chromographic temperature measurer that with a difference in colouring, as described above, indicates through the line between the different colours the level of the liquid gas inside the container. The applications of the subject invention are numerous depending on the individual situations to which such principle must be adapted. However, it must be borne in mind that the principal objective to which it will receive maximum application is that relative to containers of liquified petrol gas for domestic use. Infact, such containers presently in distribution and commercialization for kitchen or heating utilization are without any system that can indicate the quantity of gas remaining available to the utilizer at any moment during the course of its use. Such situation results frequently in containers becoming empty and leaving the user waiting for a new container to substitute the empty container, sometimes for a considerable period.

Described now are several versions of the invention with attached illustrations:

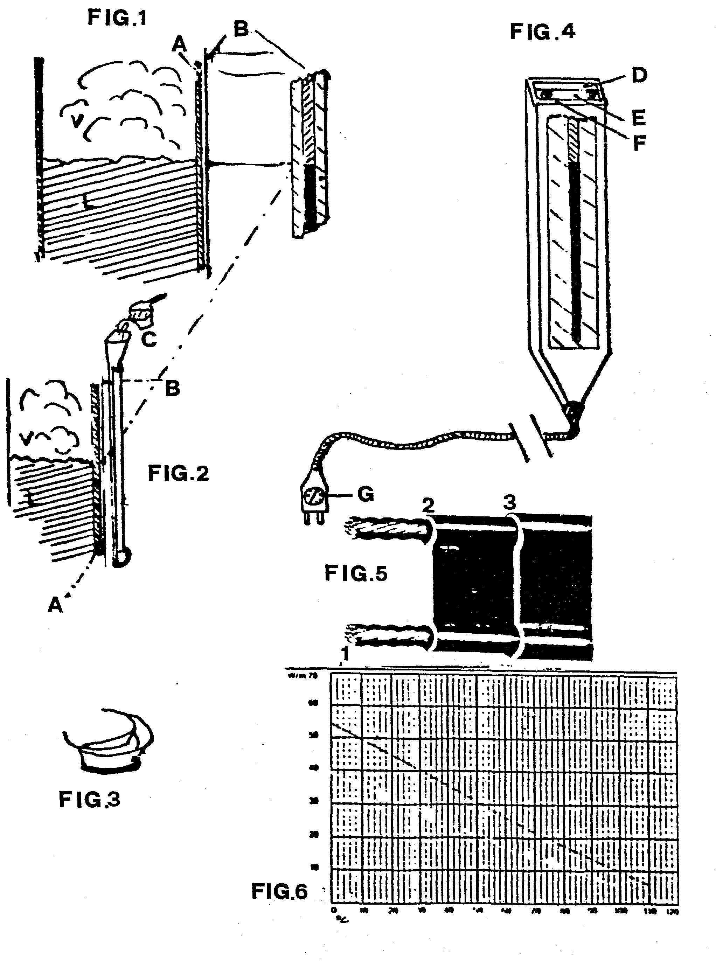

In figure 1 is illustrated a container (L = liquid; V = vapour;) the level of which is determined by the difference in temperature on the metallic wall (A) of the container through the auto-adhesive chromographic measurer (B).

In figure 2 where with (A) is indicated the metallic wall and with (B) the chromographic auto-adhesive measurer, the heat on the metallic wall of the container is applied through pouring over the area of the chromographic measurer applied to the metallic wall of a pot of boiling water (C), appropriately channelled to obtain the maximum effect.

In figure 3 is shown a container to collect water.

In figure 4 is illustrated the apparatus with both the chromographic part and the electric part. With (D) is identified the magnetic plate with (E) the electric resistence, with (F) the tape conducting heat and with (G) the time switch.

In figure 5 are indicated details of the electric resistence of the apparatus in figure 4:

(1) copper wire of 1.2 sq. mm.

(2) auto-regulated semi-conductor

(3) the insulated container.

In figure 6, the temperature curve in relation to the electric resistence is indicated.

−1−

CLAIMS

1. The thermographic method for the determination of the level of liquid or liquified gass in metallic containers is characterized through the utilization of a strip of thermal colour sensitive material extending at least along a part of the container towards the top and in contact with the external wall, and the application of heat to said strip of thermal colour sensitive material directly or indirectly from an external source and successively the natural cooling of such strip of thermal colour sensitive material, the level of the liquid in the container being indicated by the difference in colour in the said strip of thermal colour sensitive material.

2. The method as described in (1) above whereby the thermal colour sensitive material returns to its original colour.

3. The method as described in (1) above whereby the thermal colour sensitive material is made of liquid cristal.

4. The method as described in (1) above whereby the source of heat is electric.

5. The method as described in (1) above whereby the strip of thermal colour sensitive material is adhesive.

6. The apparatus to apply the method as described in (1) above is characterized by being essentially constituted of a chromographic part and an electric part, the chromographic part being comprised of a strip of thermal colour sensitive material returning to is original colour, and the eletric part being comprised of a plate of magnetic plate connected to the chromographic strip and by an insulated electrically heated tape attached to the magnetic tape.

7. The apparatus as described in (6) above whereby the electric part is integrated by a time switch.

8. The apparatus to apply the method as described in (1) above is characterized by being essentially comprised of a chromographic part consisting of a thermal colour sensitive strip which returns to its orignal colour.

9. An apparatus as described in (6) and (8) whereby the thermal colour sensitive material which

-3-

returns to its original colour is made of liquid cristal.

FIG.1

FIG.2

FIG.3

FIG.4

FIG.5

FIG.6

## DOCUMENTS CONSIDERED TO BE RELEVANT

EP 84830179.2

| Category | Citation of document with indication, where appropriate, of relevant passages | Relevant to claim | CLASSIFICATION OF THE APPLICATION (Int. Cl. ³) |
|---|---|---|---|
| X | US - A - 3 696 675 (GIL MOUR) <br> * Fig. 1-3; column 1, lines 9-16; column 1, line 36 - column 2, line 21; column 4, line 18 - column 5, line 3; column 5, lines 24-62 * | 1-9 | G 01 F 23/22 |
| A | DE - A1 - 3 211 015 (TEICHMANN) <br> * Page 3, line 1 - page 4, line 3; claims 1-3 * | 1,6 | |

TECHNICAL FIELDS
SEARCHED (Int. Cl. ³)

G 01 F 23/00

The present search report has been drawn up for all claims

| Place of search | Date of completion of the search | Examiner |
|---|---|---|
| VIENNA | 10-09-1984 | GRONAU |